# EUROPÄISCHE PATENTANMELDUNG

(11) **EP 0 833 271 A2**
(43) Veröffentlichungstag der Anmeldung: **01.04.1998**
(21) Anmeldenummer: 97114642.8
(22) Anmeldetag: 22.08.1997
(51) Int. Cl.: G06K 7/10

(54) **Kartenlesevorrichtung**

(30) Priorität: 20.09.1996 DE 19638648
(71) Anmelder: SIEMENS AKTIENGESELLSCHAFT, 80333 München (DE)
(72) Erfinder: Hoolhorst, Albert, 4527 BE Aardenburg (NL)

(57) **Zusammenfassung**

Es wird eine Kartenlesevorrichtung mit einem Kontaktträgerteil (1) und einem Kartenträgerteil (2) be'schrieben, wobei das Kartenträgerteil mit einem Kartenaufnahmeabschnitt (22) zur Aufnahme einer zu lesenden Karte ausgebildet und zusammen mit der dort eingesetzten Karte zumindest teilweise in das oder auf das Kontaktträgerteil schiebbar ist. Die beschriebene Kartenlesevorrichtung zeichnet sich dadurch aus, daß das Kartenträgerteil ein sich zumindest teilweise über den Kartenaufnahmeabschnitt hinweg erstreckendes, elastisch verformbares zungenartiges Element (225) aufweist.

## Beschreibung

Die vorliegende Erfindung betrifft eine Kartenlesevorrichtung gemäß dem Oberbegriff des Patentanspruchs 1, d.h. eine Kartenlesevorrichtung mit einem Kontaktträgerteil und einem Kartenträgerteil, wobei das Kartenträgerteil mit einem Kartenaufnahmeabschnitt zur Aufnahme einer zu lesenden Karte ausgebildet und zusammen mit der dort eingesetzten Karte zumindest teilweise in das oder auf das Kontaktträgerteil schiebbar ist.

Derartige Kartenlesevorrichtungen sind beispielsweise die in Mobiltelefonen verwendeten Lesevorrichtungen zum Entgegennehmen und/oder Weitergeben von durch eine oder für eine sogenannte SIM-Karte bzw. ein sogenanntes SIM-Modul bereitgestellten Informationen.

Die besagten SIM-Module werden in Mobiltelefonen vor allem zur Teilnehmeridentifizierung eingesetzt; "SIM" ist die Abkürzung für "Subscriber Identity Module". SIM-Module sind insbesondere aufgrund ihrer geringen Abmessungen (25 x 15 mm) sehr gut für den Einsatz in Mobiltelefonen geeignet.

Kartenlesevorrichtungen der im Patentanspruch 1 beanspruchten Art können jedoch auch Kartenlesevorrichtungen zum Lesen der "normalen" Chipkarten sein.

Die in Kartenlesevorrichtungen verwendbaren SIM-Module, "normalen" Chipkarten etc. sind allesamt Chips enthaltende Karten bzw. Chipkarten und werden im folgenden der Einfachheit halber kurz als Karten bezeichnet; der Vorgang des Entgegennehmens und/oder des Weitergebens von durch eine oder für eine Karte bereitgestellten Informationen wird nachfolgend der Einfachheit halber als Lesen der Karte bezeichnet.

Kartenlesevorrichtungen, die aus einem Kontaktträgerteil und einem in dieses oder auf dieses schiebbaren Kartenträgerteil bestehen, eignen sich unter anderem gut für den Einsatz in Mobiltelefonen. Sie sind nämlich einerseits leicht zu bedienen und weisen andererseits nur eine sehr geringe Größe auf.

Leicht zu bedienen sind derartige Kartenlesevorrichtungen deshalb, weil die zu lesenden Karten jeweils von außen, also ohne Abnehmen der Batterie (des Mobiltelefons) oder dergleichen in die Kartenlesevorrichtungen einbringbar sind.

Klein auszubilden sind derartige Kartenlesevorrichtungen beispielsweise deshalb, weil im wesentlichen allein durch eine besondere Ausgestaltung des Kartenträgerteils, also ohne große und aufwendige Mechanik verhindert werden kann, daß die zum Kontaktieren der zu lesenden Karte vorgesehenen Kontaktelemente des Kontaktträgerteils während des Einschiebens und des Entfernens der zu lesenden Karte in das bzw. aus dem Kontaktträgerteil durch die Karte kurzgeschlossen werden.

Beim Gebrauch der bekannten Kartenlesevorrichtungen dieser Art kommt es jedoch bisweilen vor, daß die zu lesende Karte und/oder die Kartenlesevorrichtung beim Einschieben des die zu lesende Karte enthaltenen Kartenträgerteils in das Kontaktträgerteil beschädigt werden.

Der vorliegenden Erfindung liegt daher die Aufgabe zugrunde, die Kartenlesevorrichtung gemäß dem Oberbegriff des Patentanspruchs 1 derart weiterzubilden, daß Beschädigungen der zu lesenden Karte und/oder der Kartenlesevorrichtung beim Einschieben des die zu lesende Karte enthaltenen Kartenträgerteils in das Kontaktträgerteil zuverlässig verhinderbar sind.

Diese Aufgabe wird erfindungsgemäß durch die im kennzeichnenden Teil des Patentanspruchs 1 beanspruchten Merkmale gelöst.

Demnach ist vorgesehen, daß das Kartenträgerteil ein sich zumindest teilweise über den Kartenaufnahmeabschnitt hinweg erstreckendes, elastisch verformbares zungenartiges Element aufweist.

Durch das Vorsehen des zungenartigen Elements kann die zu lesende Karte nicht mehr wie bisher üblich einfach durch Auflegen auf eine an die Kartenform angepaßte Kartenauflagefläche des Kartenaufnahmeabschnittes in ihre bestimmungsgemäße Position gebracht werden; sie muß vielmehr zwischen das zungenartige Element und die Kartenauflagefläche eingeschoben werden, um bestimmungsgemäß ins Kartenträgerteil eingesetzt werden zu können. Dies ist in mehrfacher Hinsicht vorteilhaft.

Einer der Vorteile besteht darin, daß die Karte im unter das zungenartige Element eingeschobenen Zustand zwischen diesem und der Kartenauflagefläche einklemmbar und so gegen ein ungewolltes Verlassen dieser Position gesichert ist. Die bestimmungsgemäß in das Kartenträgerteil eingesetzte Karte kann daher - anders als es bei den herkömmlichen Kartenlesevorrichtungen der Fall ist - dem Einschieben des Kartenträgerteils in das Kontaktträgerteil nicht im Wege stehen, so daß Beschädigungen der Karte und/oder der Kartenlesevorrichtung aufgrund zwar richtig eingesetzter, dann aber verrutschter Karten zuverlässig ausschließbar sind.

Ein weiterer Vorteil, der durch das Vorsehen des zungenartigen Elements erzielbar ist, besteht darin, daß ein nicht bestimmungsgemäßes Einsetzen der Karte in das Kartenträgerteil entweder gänzlich ausgeschlossen oder zumindest unschwer sofort erkennbar ist. Wird beispielsweise versucht, die Karte ohne Einschieben unter das zungenartige Element in den Kartenaufnahmeabschnitt einzusetzen, so kommt die Karte lose auf dem zungenartigen Element zu liegen, was auf Anhieb zweifelsfrei als eine nicht bestimmungsgemäße Position der Karte identifizierbar ist. Wird andererseits versucht, eine codierte, d.h. eine eine Codierungsschräge oder dergleichen aufweisende Karte falsch orientiert einzusetzen, so kann diese nicht oder zumindest nicht vollständig unter das zungenartige Element geschoben werden, was ebenfalls unschwer zu erkennen ist. Der Benutzer der erfindungsgemäßen Kartenlesevorrichtung kann in beiden Fällen auf den ersten Blick erkennen, daß die Karte nicht bestimmungsgemäß in das Kartenträgerteil eingesetzt ist und wird daher überhaupt nicht versuchen, das Kartenträgerteil in das Kontaktträgerteil zu schieben. Dadurch sind auch Beschädigungen der Karte und/oder der Kartenlesevorrichtung aufgrund falsch eingesetzter Karten zuverlässig ausschließbar.

Es wurde folglich eine Kartenlesevorrichtung geschaffen, bei der Beschädigungen der zu lesenden Karte und/oder der Kartenlesevorrichtung beim Einschieben des die zu lesende Karte enthaltenen Kartenträgerteils in das Kontaktträgerteil weitestgehend ausgeschlossen sind.

Vorteilhafte Weiterbildungen der Erfindung sind Gegenstand der Unteransprüche.

Die Erfindung wird nachfolgend anhand eines Ausführungsbeispiel unter Bezugnahme auf die Zeichnung näher erläutert. Es zeigen
- Figur 1A: eine Draufsicht auf ein Kontaktträgerteil einer erfindungsgemäß ausgebildeten Kartenlesevorrichtung,
- Figur 1B: eine Schnittdarstellung des in der Figur 1A gezeigten Kontaktträgerteils (Schnitt längs einer in der Figur 1A gezeigten Linie A-A),
- Figur 1C: eine Seitenansicht des in den Figuren 1A und 1B gezeigten Kontaktträgerteils,
- Figur 2A: eine Draufsicht auf ein Kartenträgerteil der erfindungsgemäß ausgebildeten Kartenlesevorrichtung,
- Figur 2B: eine Schnittdarstellung des in der Figur 2A gezeigten Kartenträgerteils (Schnitt längs einer in der Figur 2A gezeigten Linie B-B), und
- Figur 2C: eine Schnittdarstellung des in den Figuren 2A und 2B gezeigten Kartenträgerteils (Schnitt längs einer in der Figur 2B gezeigten Linie C-C).

Die im folgenden beschriebene Kartenlesevorrichtung ist eine zum Lesen von SIM-Modulen ausgelegte Kartenlesevorrichtung. Dies bedeutet jedoch nicht, daß die Erfindung auf hierfür ausgelegte Kartenlesevorrichtungen beschränkt ist; die Erfindung ist auch bei Kartenlesevorrichtungen einsetzbar, die zum Lesen beliebiger anderer Karten (Chipkarten) ausgelegt sind.

Die beschriebene Kartenlesevorrichtung besteht im betrachteten Beispiel aus einem Kontaktträgerteil und einem Kartenträgerteil; die durch die Kartenlesevorrichtung zu lesende Karte wird in das Kartenträgerteil eingesetzt und zusammen mit diesem in das Kontaktträgerteil eingeschoben.

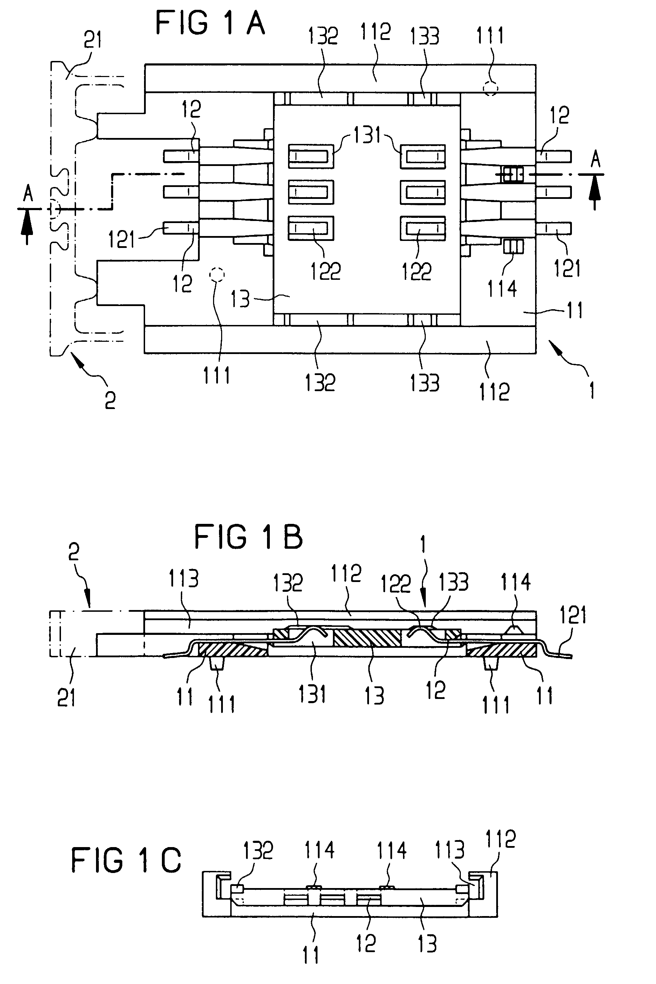

Das genannte Kontaktträgerteil ist in den Figuren 1A, 1B und 1C gezeigt; es ist dort mit dem Bezugszeichen 1 bezeichnet.

Das Kontaktträgerteil 1 besteht aus einem Isolierkörper 11, sechs Kontaktelementen in Form von Kontaktfedern 12 und einem Kontaktelementestellungsveränderungselement in Form einer Platte 13.

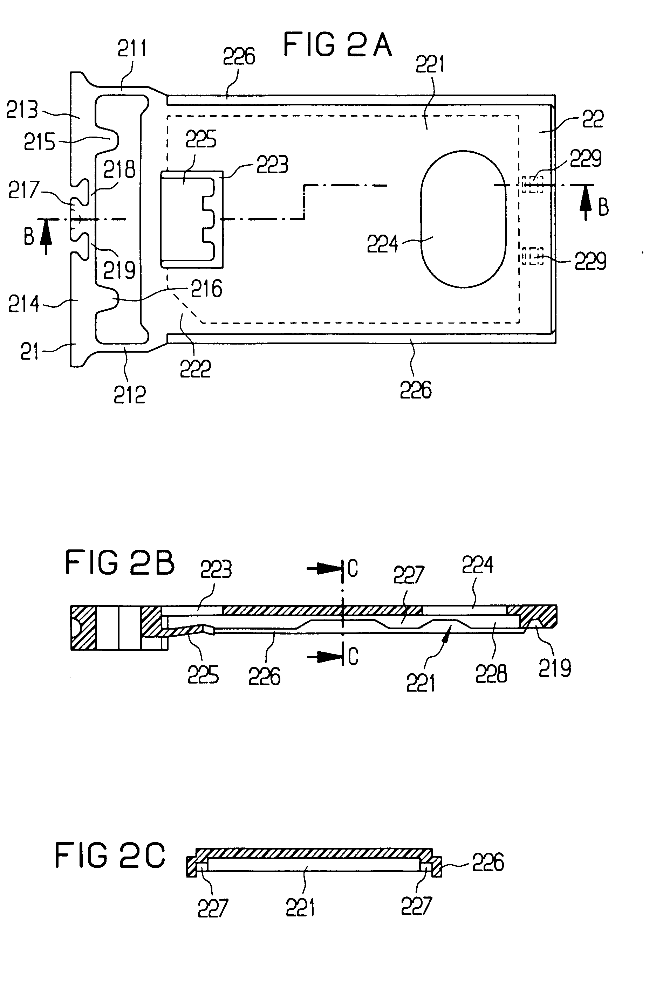

In den Figuren 1A und 1B sind durch gestrichelte Linien auch Teile des später insbesondere unter Bezugnahme auf Figur 2 näher beschriebenen Kartenträgerteils 2 im in das Kontaktträgerteil 1 eingeschobenen Zustand dargestellt.

Das Kontaktträgerteil 1, genauer gesagt der Isolierkörper 11 und die Kontaktfedern 12 desselben sind zur Montage auf einer (in den Figuren nicht gezeigten) elektrischen Leiterplatte ausgelegt. Der Isolierkörper 11 weist zu diesem Zweck, wie insbesondere aus den Figuren 1A und 1B ersichtlich ist, Montagezapfen 111 auf, welche in entsprechende Ausnehmungen in der elektrischen Leiterplatte einsteckbar und bei Bedarf dort auch befestigbar sind; die Kontaktfedern 12 sind an jeweils einem ihrer Enden als Lötfahnen 121 ausgebildet, welche beispielsweise unter Verwendung eines SMT-Lötverfahrens mit der Leiterplatte verlötbar sind.

Der Isolierkörper 11 ist derjenige Bestandteil des Kontaktträgerteils 1, der dieses, genauer gesagt dessen weitere Bestandteile zusammenhält und ein bestimmungsgemäßes Zusammenwirken derselben mit dem Kartenträgerteil 2 ermöglicht.

Die letztgenannte Funktion des Isolierkörpers 11 kann dieser insbesondere durch Vorsehen nutenartiger Aussparungen 113 in erhöhten Randabschnitten 112 an einander gegenüberliegenden Seiten des Isolierkörpers 11 erfüllen; die (einander zugewandten) nutenartigen Aussparungen 113 können, wie insbesondere aus der Figur 1C ersichtlich ist, als Führung für das mit dem Kontaktträgerteil 1 (durch ein Übereinander- bzw. ein Ineinanderschieben) in Eingriff zu bringende, später noch genauer beschriebene Kartenträgerteil 2 dienen. Die Richtung, längs welcher das Kartenträgerteil 2 relativ zum Kontaktträgerteil 1 bewegt werden muß, um in dieses eingeschoben zu werden, ist bei den Darstellungen gemäß den Figuren 1A und 1B die horizontal nach rechts verlaufende Richtung und bei der Darstellung gemäß der Figur 1C die frontal in die Zeichnungsebene hinein verlaufende Richtung.

Die Kontaktfedern 12 weisen jeweils einen kuppenartig ausgebildeten, elastisch verformbaren (bewegbaren) Endabschnitt 122 auf. Dieser Endabschnitt 122 ist jeweils derjenige Teil der Kontaktfedern 12, mit welchem diese mit den Kontaktflächen (Oberflächenkontakten) der zu lesenden Karte(n) in Kontakt kommen.

Wie insbesondere aus der Figur 1A ersichtlich ist, sind die Kontaktfedern 12 teilweise durch die Platte 13 bedeckt. Die Platte 13 weist Aussparungen 131 auf, durch welche die Endabschnitte 122 der Kontaktfedern 12 hindurchragen können.

Die Aussparungen 131 sind derart positioniert, daß die Endabschnitte 122 der Kontaktfedern genau mit den Kontaktflächen der zu lesenden Karte zusammentreffen, wenn sich diese innerhalb der Kartenlesevorrichtung in ihrer Lesestellung befindet. Im betrachteten Beispiel sind, da die zu lesende Karte ein SIM-Modul ist, insgesamt sechs Kontaktfedern 12 vorgesehen, die in zwei, jeweils drei Kontaktfedern 12 umfassenden Reihen angeordnet sind.

Die Platte 13 weist an ihren den erhöhten Randabschnitten 112 des Isolierkörpers 11 zugewandten Seiten jeweils Erhebungen 132 und 133 auf, welche sich im wesentlichen parallel zu den erhöhten Randabschnitten 112 in geringem Abstand zu diesen erstrecken und, wie insbesondere aus den Figuren 1B und 1C ersichtlich ist, teilweise die in den Randabschnitten 112 vorgesehenen nutenartigen Aussparungen 113 bedecken.

Die Erhebungen 132 und 133 der Platte 13 stehen beim Einschieben des Kartenträgerteils 2 in die nutenartigen Aussparungen 113 des Kontaktträgerteils 1 hindernd im Weg. Die Platte 13 kann jedoch, wie noch genauer beschrieben werden wird, durch das Kartenträgerteil 2 zur Leiterplatte hin aus dem Weg gedrückt werden. Dies hat zweierlei Auswirkungen: Zum einen kann das Kartenträgerteil 2 danach im wesentlichen ungehindert in das Kontaktträgerteil 1 eingeschoben werden, und zum anderen werden durch das Wegdrücken der Platte 13 nicht nur diese selbst, sondern auch die Kontaktfedern 12 (insbesondere deren Endabschnitte 122) weggedrückt.

Das Wegdrücken der Kontaktfedern 12 wird durch das Wegdrücken der Platte 13 bewirkt; die Kontaktfedern 12, genauer gesagt insbesondere deren Endabschnitte 122 werden von der Platte 13 mitgenommen.

Das Wegdrücken der Platte 13 durch das Kartenträgerteil 2 wird durch Erhebungen des Kartenträgerteils 2 bewirkt, welche beim Einschieben des Kartenträgerteils 2 in das Kontaktträgerteil 1 über die Erhebungen 132 und 133 der Platte 13 unter Wegdrücken derselben hinweglaufen. Damit die Erhebungen des Kartenträgerteils 2, welche sich von Haus aus auf der selben Höhe wie die Erhebungen 132 und 133 der Platte 13 befinden, widerstandsarm über diese hinweglaufen können, weisen die Erhebungen 132 und 133, wie insbesondere aus der Figur 1B ersichtlich ist, an ihren vorderen und hinteren Enden Auflaufschrägen auf.

Im vollständig in das Kontaktträgerteil 1 eingeschobenen Zustand des Kartenträgerteils 2 befindet sich eine im Kartenträgerteil 2 aufgenommene (zu lesende) Karte automatisch in ihrer Lesestellung. In diesem Zustand haben die Erhebungen des Kartenträgerteils 2 die Erhebungen 132, 133 des Kontaktträgerteils 1 so weit überquert, daß das aktive Wegdrücken der Platte 13 durch das Kartenträgerteil 2 beendet ist. Die Platte 13 wird durch die Federkraft der Kontaktfedern 12 in Richtung ihrer ursprünglichen Stellung zurückgedrückt, und zwar so weit, bis diese, genauer gesagt deren kuppenartige Endabschnitte 122 die zu lesende Karte (deren Kontaktflächen) erreichen und dadurch kontaktieren.

Damit das Kartenträgerteil 2 nicht einfach aus dem Kontaktträgerteil 1 herausfallen kann, weist das Kontaktträgerteil 2, genauer gesagt der Isolierkörper 11 desselben ein oder mehrere Rastelemente in Form von Rastnasen 114 auf, welche im vollständig in das Kontaktträgerteil 1 eingeschobenen Zustand des Kartenträgerteils 2 mit zugeordneten Rastelementen (Rastvertiefungen) des Kartenträgerteils 2 verrasten.

Das zuvor bereits mehrfach erwähnte Kartenträgerteil 2 ist in den Figuren 2A, 2B und 2C detailliert dargestellt und dort mit dem Bezugszeichen 2 bezeichnet.

Das Kartenträgerteil 2 ist einstückig ausgebildet; es weist einen Entriegelungsabschnitt 21 und einen Kartenaufnahmeabschnitt 22 auf.

Der Kartenaufnahmeabschnitt 22 weist, wie insbesondere aus der Figur 2A ersichtlich ist, eine dort durch gestrichelte Linien dargestellte, als Kartenauflagefläche dienende wannenartige Vertiefung 221 auf, in welche die zu lesende Karte einsetzbar ist. Die wannenartige Vertiefung 221 ist an die Form der zu lesenden Karte angepaßt; sie weist wie die bei der betrachteten Kartenlesevorrichtung als Karten zu verwendenden SIM-Module eine sogenannte Codierungsschräge 222 auf, durch welche ein falsch orientiertes Einlegen des SIM-Moduls in die wannenartige Vertiefung 221 verhindert werden soll.

Die wannenartige Vertiefung 221 weist, wie insbesondere aus den Figuren 2A und 2B ersichtlich ist, in ihrem Boden Öffnungen 223 und 224 auf, welche es ermöglichen, eine in die wannenartige Vertiefung 221 eingesetzte Karte von jenseits des Bodens aus der wannenartigen Vertiefung 221 herauszudrücken und aus dem Kartenträgerteil 2 zu entnehmen.

Vom Rand der wannenartigen Vertiefung 221 geht ein elastisch verformbar (biegbar) ausgebildetes, zungenartiges Element 225 ab, welches sich zumindest teilweise über die wannenartige Vertiefung 221 hinweg erstreckt.

Zwischen dieses zungenartige Element 225 und dem Boden der wannenartigen Vertiefung 221 muß eine zu lesende Karte eingeschoben werden, wenn sie ordnungsgemäß (bestimmungsgemäß) in das Kartenträgerteil 2 eingesetzt werden soll.

Der Abstand zwischen dem zungenartigen Element 225 und dem Boden der wannenartigen Vertiefung 221 entspricht in etwa der Dicke der Karte, die dort einzusetzen ist.

Das zungenartige Element 225 ist, wie vorstehend bereits erwähnt wurde, elastisch biegbar ausgebildet. D.h., zum Einstecken der Karte zwischen das zungenartige Element 225 und den Boden der wannenartigen Vertiefung 221 läßt sich das zungenartige Element 225 elastisch nach oben biegen, und im bestimmungsgemäß in die wannenartige Vertiefung 221 eingesetzten Zustand der Karte drückt das zungenartige Element 225 die Karte gegen den Boden der wannenartigen Vertiefung 221. Diese Klemmwirkung des zungenartigen Elements 225 und ferner die vorstehend bereits erwähnte Tatsache, daß die wannenartige Vertiefung 221 an die Form der zu lesenden Karte(n) angepaßt ist, verleihen der Karte im bestimmungsgemäß eingesetzten Zustand einen nach allen Richtungen hin gegen ein Verrutschen oder Verschieben gesicherten Sitz.

Eine einmal bestimmungsgemäß in das Kartenträgerteil 2 eingesetzte Karte kann die eingenommene Stellung nicht mehr ohne eine ganz gezielte Fremdeinwirkung verlassen. Das die zu lesende Karte enthaltende Kartenträgerteil 2 kann daher in das Kontaktträgerteil 1 eingeschoben werden, ohne daß die Karte hierbei plötzlich hindernd im Wege steht. Beschädigungen der Karte und/oder der Kartenlesevorrichtung aufgrund zwar richtig eingesetzter, dann aber verrutschter oder verschobener Karten sind dadurch zuverlässig ausgeschlossen.

Andererseits kann aber auch unschwer sofort erkannt werden, wenn die zu lesende Karte nicht bestimmungsgemäß und vollständig zwischen das zungenartige Element 225 und den Boden der wannenartigen Vertiefung 221 eingesetzt ist. Die Karte liegt dann nämlich entweder lose auf dem zungenartigen Element 225 auf oder steht zumindest teilweise über den Rand der wannenartigen Vertiefung 221 über. Beide der genannten Zustände stechen sofort ins Auge und zeigen einem Benutzer der Kartenlesevorrichtung an, daß die zu lesende Karte noch nicht bestimmungsgemäß in das Kartenträgerteil 2 eingesetzt ist.

Das zungenartige Element 221 ist vorzugsweise an einer Stelle vorgesehen, welche benachbart zu der Codierungsschräge 222 der wannenartigen Vertiefung 221 liegt. Anders ausgedrückt ist die Codierungsschräge vorzugsweise derart angeordnet, daß diese ein Einschieben der zu lesenden Karte mit deren Codierungsschräge voraus erfordert. Wird die Karte in ein derart aufgebautes Kartenträgerteil falsch orientiert eingeführt, so schlägt ein keine Codierungsschräge aufweisender Abschnitt der Karte gegen die Codierungsschräge 222 der wannenartigen Vertiefung 221 an und kann nicht mehr weiter eingeschoben werden. Sofern die Karte beim Anschlagen an die Codierungsschräge 222 bereits teilweise unter das zungenartige Element 225 gelangt ist, kann sie mit dem keine Codierungsschräge aufweisenden Abschnitt auch nicht auf der Codierungsschräge 222 zu liegen kommen; dies wird erkennbar durch den nur in etwa der Dicke der Karte entsprechenden Abstand zwischen dem zungenartigen Element 225 und dem Boden der wannenartigen Vertiefung 221 unterbunden. Ist die Karte beim Anschlagen an die Codierungsschräge 222 hingegen noch nicht unter das zungenartige Element 225 gelangt, so kann sie zwar mit dem keine Codierungsschräge aufweisenden Abschnitt auf der Codierungsschräge 222 der wannenartigen Vertiefung 221 zu liegen kommen, doch kann dies wiederum unschwer als nicht bestimmungsgemäße Position der Karte erkannt werden.

Wie den vorstehenden Erläuterungen entnehmbar ist, kann es sich als günstig erweisen, das zungenartige Element 225 derart anzuordnen und/oder auszubilden, daß die Karte nur dann zwischen das zungenartige Element 225 und den Boden der wannenartigen Vertiefung 221 gelangen kann, wenn versucht wird, die Karte richtig orientiert in die wannenartige Vertiefung 221 einzusetzen. Bei der in der Figur 2 gezeigten Anordnung des zungenartigen Elements 225 kann dies beispielsweise durch eine entsprechend kurze Ausbildung desselben bewerkstelligt werden.

Es kann sich ferner als günstig erweisen, wenn das zungenartige Element derart angebracht und/oder ausgebildet ist, daß die Karte nur aus einer ganz bestimmten Richtung zwischen das zungenartige Element 225 und den Boden der wannenartigen Vertiefung 221 einsteckbar ist. Dies kann bei der in der Figur 2 gezeigten Anordnung des zungenartigen Elements 225 beispielsweise dadurch erreicht werden, daß das dieses besonders breit ausgebildet und/oder in unmittelbarer Nähe des Randes der wannenartigen Vertiefung 221 mit dem Kartenträgerteil 2 verbunden ist.

Der Vollständigkeit halber sei abschließend zu diesem Thema darauf hingewiesen, daß die Kartenauflagefläche nicht nur durch die wannenartige Vertiefung 221 gebildet und begrenzt sein kann. Alternativ oder zusätzlich kann die Kartenauflagefläche auch durch vollständig oder teilweise umlaufende Stege, wandartige Erhebungen oder dergleichen definiert sein.

Wie insbesondere aus der Figur 2C ersichtlich ist, weist der Kartenaufnahmeabschnitt 22 an dessen beim Einschieben des Kartenträgerteils 2 in das Kontaktträgerteil 1 den erhöhten Randabschnitten 112 des Kontaktträgerteils 1 zugewandten Seiten erhöhte Randabschnitte 226 auf.

Die Randabschnitte 226 sind nach außen hin derart gestaltet, daß sie beim Einschieben des Kartenträgerteils 2 in das Kontaktträgerteil 1 in den nutenartigen Aussparungen 113 des Kontaktträgerteils 1 laufen und in diesen geführt werden.

Die nach innen weisenden Bereiche der Randabschnitte sind, wie insbesondere aus den Figuren 2B und 2C ersichtlich ist, mit Erhebungen 227 und 228 versehen, die derart positioniert und gestaltet sind, daß sie beim Einschieben des Kartenträgerteils 2 in das Kontaktträgerteil 1 über die Erhebungen 132 und 133 der Platte 13 des Kontaktträgerteils 1 hinweglaufen und einhergehend damit die Platte 13 zusammen mit den kuppenartigen Endabschnitten 122 der Kontaktfedern 12 des Kontaktträgerteils 1 aus dem Einschubweg drücken. Die Erhebungen 227 und 228 des Kartenträgerteils 1 sind wie die Erhebungen 132 und 133 der Kontaktträgerteils 1 mit Auflaufschrägen versehen.

Die Funktion und die Wirkungsweise der Erhebungen 227 und 228 und deren Zusammenwirken mit den Erhebungen 132 und 133 des Kontaktträgerteils 1 wurden bereits bei der Beschreibung des Kontaktträgerteils 1 ausführlich beschrieben und bedürfen an dieser Stelle keiner weiteren Erläuterung.

Das Kartenträgerteil 2, genauer gesagt dessen Kartenaufnahmeabschnitt 22 weist an dessen bezüglich der Einschubrichtung vorderen Ende ein oder mehrere Rastelemente in Form von Rastvertiefungen 229 auf, welche im in das Kontaktträgerteil 1 eingeschobenen Zustand des Kartenträgerteils 2 mit den Rastnasen 114 des Kontaktträgerteils 1 verrasten und dadurch ein unbeabsichtigtes Entfernen des Kartenträgerteils 2 aus dem Kontaktträgerteil 1 verhindern.

Das Lösen dieser Rastverbindung ist mit Hilfe des zuvor bereits erwähnten Entriegelungsabschnittes 21 des Kartenträgerteils 2 bewerkstelligbar.

Der Entriegelungsabschnitt 21 ist durch zwei elastisch verformbare (biegbare) Verbindungselemente 211 und 212 mit dem Kartenaufnahmeabschnitt 22 verbunden. Außer den Verbindungselementen 211 und 212 weist der Entriegelungsabschnitt 21 noch zwei nebeneinander angeordnete Kipphebel 213 und 214 und einen zwischen diesen vorgesehenen Kipphebelbetätigungsabschnitt auf; die Verbindungselemente 211 und 212 sind mit den voneinander abgewandten Armen der Kipphebel 213 und 214 verbunden.

Die Kipphebel 213 und 214 weisen Abstützelemente 215 bzw. 216 auf, welche im in das Kontaktträgerteil 1 eingeschobenen Zustand des Kartenträgerteils 2 an das Kontaktträgerteil 1 anschlagen.

Der Kipphebelbetätigungsabschnitt besteht aus einem Druckkraftansatzabschnitt 217 und zwei elastisch verformbaren (biegbaren) Verbindungselementen 218 und 219; die Verbindungselemente 218 bzw. 219 verbinden den Druckkraftansatzabschnitt 217 mit den einander zugewandten Armen der Kipphebel 213 bzw. 214.

Die Betätigung dieses Mechanismus erfolgt dadurch, daß auf den (von außen zugänglichen) Druckkraftansatzabschnitt 217 eine Druckkraft ausgeübt wird. Dies kann beispielsweise durch Eindrücken eines Kugelschreibers oder dergleichen in eine im Druckkraftansatzabschnitt 217 vorgesehene Vertiefung bewerkstelligt werden.

Beim Ausüben einer Druckkraft auf den Druckkraftansatzabschnitt 217 wird dieser in Richtung der wirkenden Druckkraft verschoben. Die elastisch biegbaren Verbindungselemente 218 und 219 folgen der Bewegung des Druckkraftansatzabschnittes 217 und ziehen dabei an den Armen der Kipphebel 213 und 214, mit welchen sie verbunden sind. Das Ziehen an den einander zugewandten Armen der Kipphebel bewirkt, daß diese sich um die am Kontaktträgerteil 1 anschlagenden Abstützelemente 215 und 216 in einander entgegengesetzte Richtungen drehen. Dies wiederum hat zur Folge, daß auf die Verbindungselemente 211 und 212, welche die voneinander abgewandten Arme der Kipphebel 213 und 214 mit dem Kartenaufnahmeabschnitt 22 verbinden, eine Zugkraft wirkt. Diese auf die Verbindungselemente 211 und 212 wirkende Zugkraft hat zur Folge, daß diese am Kartenaufnahmeabschnitt 22 des Kartenträgerteils 2 ziehen. Durch das Ziehen am Kartenaufnahmeabschnitt 22 kommen die ursprünglich miteinander verrasteten Rastelemente 114 und 229 außer Eingriff, und mehr oder weniger gleichzeitig gelangen die Erhebungen 227 und 228 des Kartenträgerteils 2 über die Erhebungen 132 und 133 der Platte 13 des Kontaktträgerteils 1. Im Ergebnis wird das Kartenträgerteil 2 (dessen Kartenaufnahmeabschnitt 22) dadurch unter Wegdrücken der Platte 13 ein Stück aus dem Kontaktträgerteil 1 herausgezogen.

Nimmt man dann die auf den Druckkraftansatzabschnitt 217 ausgeübte Druckkraft zurück, so entspannt sich der elastisch deformierte Entriegelungsabschnitt 21, und das gesamte Kartenträgerteil 2 steht nun so weit aus dem die beschriebene Kartenlesevorrichtung enthaltenden Gerät heraus, daß es durch Greifen des herausstehenden Teils, d.h. durch Greifen des Entriegelungsabschnittes 21 manuell vollständig aus dem Kontaktträgerteil 1 herausgezogen werden kann. Die Platte 13 und die Kontaktfedern 12 werden hierbei wie beim Einschieben des Kartenteils 2 in das Kontaktträgerteil 1 in einer von der Kartenoberfläche beabstandeten Stellung gehalten.

Die in das Kartenträgerteil 2 eingesetzte Karte bleibt sowohl beim Einführen des Kartenträgerteils 2 in das Kontaktträgerteil 1 als auch beim Entfernen des Kartenträgerteils 2 aus dem Kontaktträgerteil 1 stets in ihrer bestimmungsgemäßen Position innerhalb des Kartenträgerteils 2. Die Gefahr von Beschädigungen der zu lesenden Karte und/oder der Kartenlesevorrichtung beim Zusammenschieben und Trennen von Kontaktträgerteil 1 und Kartenträgerteil 2 ist dadurch nahezu vollständig eliminierbar.

## Patentansprüche

1. Kartenlesevorrichtung mit einem Kontaktträgerteil (1) und einem Kartenträgerteil (2), wobei das Kartenträgerteil mit einem Kartenaufnahmeabschnitt (22) zur Aufnahme einer zu lesenden Karte ausgebildet und zusammen mit der dort eingesetzten Karte zumindest teilweise in das oder auf das Kontaktträgerteil schiebbar ist,
**dadurch gekennzeichnet,**
daß das Kartenträgerteil ein sich zumindest teilweise über den Kartenaufnahmeabschnitt hinweg erstreckendes, elastisch verformbares zungenartiges Element (225) aufweist.

2. Kartenlesevorrichtung nach Anspruch 1,
**dadurch gekennzeichnet,**
daß der Kartenaufnahmeabschnitt (22) eine an die Form der zu lesenden Karte angepaßte wannenartige Vertiefung (221) aufweist.

3. Kartenlesevorrichtung nach Anspruch 2,
**dadurch gekennzeichnet,**
daß das zungenartige Element (225) vom Rand der wannenartigen Vertiefung (221) abgeht.

4. Kartenlesevorrichtung nach Anspruch 2 oder 3,
**dadurch gekennzeichnet,**
daß der Abstand zwischen dem Boden der wannenartigen Vertiefung (221) und dem zungenartigen Element (225) in etwa der Dicke der zu lesenden Karte entspricht.

5. Kartenlesevorrichtung nach einem der Ansprüche 2 bis 4,
**dadurch gekennzeichnet,**
daß der Boden der wannenartigen Vertiefung (221) mit mindestens einer Öffnung (223, 224) versehen ist, durch welche hindurch die Karte aus der wannenartigen Vertiefung herausdrückbar ist.

6. Kartenlesevorrichtung nach einem der Ansprüche 2 bis 5,
**dadurch gekennzeichnet,**
daß das zungenartige Element (225) derart angeordnet ist, daß die zu lesende Karte mit einer gegebenenfalls vorhandenen Codierungsschräge derselben voraus zwischen das zungenartige Element und den Boden der wannenartigen Vertiefung (221) eingeschoben werden muß.

7. Kartenlesevorrichtung nach einem der vorhergehenden Ansprüche,
**dadurch gekennzeichnet,**
daß das zungenartige Element (225) eine relativ geringe Länge aufweist.

8. Kartenlesevorrichtung nach einem der vorhergehenden Ansprüche,
**dadurch gekennzeichnet,**
daß das zungenartige Element (225) eine relativ große Breite aufweist.

9. Kartenlesevorrichtung nach einem der vorhergehenden Ansprüche,
**dadurch gekennzeichnet,**
daß das zungenartige Element (225) derart ausgebildet und/oder angeordnet ist, daß eine unter dieses eingeschobene Karte zwischen diesem und dem Boden der wannenartigen Vertiefung (221) eingeklemmt wird.

10. Kartenlesevorrichtung nach einem der vorhergehenden Ansprüche,
**dadurch gekennzeichnet,**
daß das Kartenträgerteil (2) einschließlich des zungenartigen Elements (225) einstückig als zusammenhängende Einheit ausgebildet ist.
